(19) Europäisches Patentamt
European Patent Office
Office européen des brevets

(11) **EP 2 492 475 B1**

(12) **EUROPÄISCHE PATENTSCHRIFT**

(45) Veröffentlichungstag und Bekanntmachung des Hinweises auf die Patenterteilung:
**21.05.2014 Patentblatt 2014/21**

(51) Int Cl.:
*F02D 41/00* *(2006.01)*    *G01P 3/489* *(2006.01)*

(21) Anmeldenummer: **11009289.7**

(22) Anmeldetag: **23.11.2011**

(54) **Verfahren zur automatischen Bestimmung eines Geberradfehlers einer Brennkraftmaschine**

Method for automatic detection of a rotary encoder error of a combustion engine

Procédé de détermination automatique d'une erreur de roue de détection d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2010 DE 102010054532**

(43) Veröffentlichungstag der Anmeldung:
**29.08.2012 Patentblatt 2012/35**

(73) Patentinhaber: **Volkswagen Aktiengesellschaft
38440 Wolfsburg (DE)**

(72) Erfinder:
• **Köller, Malte
18311 Ribnitz-Damgarten (DE)**
• **Klie, Stefan
38102 Braunschweig (DE)**

(56) Entgegenhaltungen:
WO-A1-2005/083252    DE-A1- 4 216 058
FR-A1- 2 903 448    US-B1- 7 194 899

**Beschreibung**

Die vorliegende Erfindung betrifft ein Verfahren zur automatischen Bestimmung eines Geberradfehlers einer Brennkraftmaschine und eine entsprechende Vorrichtung zur Bestimmung des Geberradfehlers der Brennkraftmaschine.

Bei der Drehzahlerfassung und Drehwinkelerfassung an Brennkraftmaschinen, insbesondere an Brennkraftmaschinen von Fahrzeugen, wie z.B. Personenkraftwagen oder Lastkraftwagen, werden sogenannte Geberräder verwendet. Die Geberräder können beispielsweise an einer Kurbelwelle oder einer Nockenwelle der Brennkraftmaschine angebracht sein. Die Geberräder können mit Markierungen, wie z.B. Zähnen, versehen sein, welche mittels eines feststehenden Messaufnehmers oder Sensors abgetastet werden. Vorzugsweise weist das Geberrad an seinem Umfang gleichmäßig verteilt eine vorbestimmte Anzahl von Zähnen auf. Zur Bestimmung der absoluten Position des Geberrades können an einer vorbestimmten Stelle des Geberrades ein oder mehrere Zähne weggelassen werden. Dabei werden in dem Messaufnehmer, beispielsweise einem induktiven Sensor, von den vorbeilaufenden Markierungen Spannungsimpulse induziert und in einer nachfolgenden Auswerteschaltung wird aus den zeitlichen Abständen dieser Spannungsimpulse die Drehzahl oder die Winkelgeschwindigkeit der Welle ermittelt. Je genauer die Erfassung des Drehwinkels von beispielsweise der Kurbelwelle der Brennkraftmaschine sowie der Drehzahl derselben am Geberrad erfasst werden kann, desto genauer kann ein Regelverfahren eines Regelkreises zur Steuerung der Brennkraftmaschine arbeiten.

Die Drehzahl- und Winkelwerte können jedoch durch Toleranzeinflüsse verfälscht werden. Zu solchen Toleranzeinflüssen zählen beispielsweise Teilungsfehler am Geberrad, ein Anbaufehler des Messaufnehmers oder des Geberrades an der Stirnseite der Kurbelwelle, sowie Toleranzen des Messaufnehmers. Dadurch können einzelne Winkel zwischen zwei Zähnen vom Idealwert erheblich abweichen. In dem Stand der Technik sind daher verschiedene Ansätze bekannt, um den Geberradfehler zu bestimmen oder Auswirkungen des Geberradfehlers zu kompensieren.

Die DE 10 2005 047 577 A1 betrifft ein Verfahren zur Bestimmung einer Drehzahl einer Kurbelwelle einer Brennkraftmaschine mit einer Geberscheibe, die mit einer Kurbelwelle der Brennkraftmaschine verbunden ist. Die Geberscheibe weist eine Markierung durch abwechselnde Anordnung von Zähnen und Zahnlücken auf. Die Drehzahl der Kurbelwelle wird aus einem Quotienten eines zwischen zwei Zähnen überstrichenen Winkels und einer gewichteten gemittelten Zahnzeit bestimmt. Die gewichtete gemittelte Zahnzeit wird aus der aktuellen Zahnzeit unter Berücksichtigung vorheriger Zahnzeiten ermittelt. Die vorherigen Zahnzeiten werden in Form eines über mehrere Zähne, also über einen Kurbelwellenwinkelbereich größer einem Zahnabstand, ermittelt.

Die EP 1 272 858 B1 betrifft ein Verfahren zur Kompensation der Drehunförmigkeit bei der Drehzahlerfassung. Dabei werden zur genauen Erfassung von Winkel und Drehzahl gemessene Segmentzeiten um gelernte Geberradfehler korrigiert, so dass sich die überlagernden Einflüsse von Geberradfehlern und Drehunförmigkeit des Verbrennungsmotors voneinander trennen lassen. Die Drehunförmigkeit des Verbrennungsmotors wird aus dem Betriebspunkt des Motors, der durch die Drehzahl, den Ladedruck sowie die Einspritzmenge definiert ist, rekonstruiert. Dazu kann das Drehmoment durch dessen Gleichanteil sowie Harmonische der ersten Hauptordnung des Verbrennungsmotors beschrieben werden. Alternativ kann die Drehunförmigkeit der Verbrennungskraftmaschine anhand der Frequenzanteile der Hauptordnungen des Motors bestimmt werden. Für diese Frequenzanteile lassen sich über eine diskrete Fourier-Transformation über jeweils eine Kurbelwellenumdrehung der Betrag und die Phase der zugehörigen Segmentzeitschwankung bestimmen.

Die DE 195 40 674 C2 betrifft ein Adaptionsverfahren zur Korrektur von Toleranzen eines Geberrades. Dabei wird aus aktuell gemessenen Zahnzeitwerten eine mittlere Zahnzeit berechnet und die aktuellen Zahnzeitwerte auf die mittlere Zahnzeit normiert. Abhängig von einem ermittelten Drehzahlbereich der Brennkraftmaschine wird für jeden Zahn ein Adaptionsfaktor festgelegt. Die normierten Zahnzeiten werden zur Korrektur eines zugehörigen Adaptionsfaktors im entsprechenden Drehzahlbereich herangezogen und aus den korrigierten Adaptionsfaktoren ein drehzahlunabhängiger Korrekturfaktor für jeden Zahn berechnet, welcher zur Korrektur des jeweiligen Zahnzeitwertes herangezogen wird.

Die DE 102 46 806 A1 betrifft ein Geberrad mit einer variablen Breite von aufeinanderfolgenden Zähnen. Dadurch ist es möglich, die Winkelstellung der Kurbelwelle allein durch die Zahnbreite zu bestimmen, wenn entsprechende aufeinanderfolgende Kombinationen von Zahnbreiten über den Umfang des Geberrades verteilt nur einmal auftauchen und einer bestimmten Winkelstellung zugeordnet sind.

Die DE 102 56 527 A1 betrifft ein Verfahren zur Adaption von Winkelfehlern eines Phasensignals eines Phasensensors an der Nockenwelle eines Verbrennungsmotors während des Anlaufbetriebs. Dabei wird eine Anlaufabweichung des Phasensignals zum Kurbelwellensignal im Anlaufbetrieb bestimmt und die Anlaufabweichung mit einer Normallage des Phasensignals zum Kurbelwellensignal verglichen. Aus dem Vergleich wird eine Differenzabweichung bestimmt und in einem nichtflüchtigen Speicher abgelegt. Bei einem erneuten Anlaufbetrieb wird die Anlaufabweichung des Phasensignals durch Korrigieren um die im Speicher abgelegte Differenzabweichung adaptiert.

Die DE 101 23 022 B4 betrifft ein Drehzahlerfassungsverfahren, bei dem die momentane Drehzahl der Brennkraftmaschine ohne zeitliche Verzögerung genau bestimmt werden kann. Dazu werden aus einem Kennfeld betriebsparameterabhängige Korrekturfaktoren entnommen, welche Entwicklungskoeffizienten einer Reihenentwicklung einer Schwingungsfunktion zur Modellierung im Betrieb der Brennkraftmaschine auftretender periodischer Drehzahlschwingungen sind, und die Zeitdauer, die der Durchlauf eines Sektors bestimmter Größe eines mit der Kurbelwelle verbundenen Sektorenrades dauert, unter Verwendung dieser Korrekturfaktoren korrigiert, um eine Bereinigung hinsichtlich der Drehzahlschwingungen zu erreichen.

Die EP 0 929 794 B1 betrifft ein Verfahren zur Korrektur von Toleranzen eines Geberrades mit einer Anzahl von Markierungen, deren Abstände näherungsweise gleich sind und von einem Aufnehmer abgetastet werden, der eine Pulsfolge für Messwerte liefert. Ausgehend von einem Vergleich der einzelnen Messwerte mit einem Referenzwert werden Korrekturwerte ermittelt. Dabei erfolgen mindestens eine erste und eine zweite frequenzselektive Filterung der Messwerte. Die erste Filterung selektiert Frequenzanteile, die auf Toleranzen beruhen, die nicht vom Betriebszustand abhängen, und die zweite Filterung selektiert Frequenzanteile, die auf Toleranzen beruhen, die vom Betriebszustand abhängen.

Die DE 60 2004 009 400 T2 betrifft ein Verfahren zum Bestimmen einer Motordrehzahlschwankung aus abgetasteten Messdaten, insbesondere Kurbelwinkelpositionen, die durch einen Kurbelwinkelsensor vorgegeben werden. Bei dem Verfahren wird ein trigonometrisches Polynom, welches die Motordrehzahl darstellt zugeordnet. Das trigonometrische Polynom umfasst eine Menge mit Modellkoeffizienten multiplizierter trigonometrischer Funktionen. In einem Moving-Window der Größe w werden Messdaten abgerufen. w definiert die Anzahl von Messdaten, die in dem Fenster enthalten sind. Das trigonometrische Polynom wird durch Bestimmen der Modellkoeffizienten zu einem Moving-Window der Größe w interpoliert. Durch Eingeben neuer Messdaten und Verwerfen der ersten Messdaten in dem Fenster und Wiederholen der zuvor genannten Schritte wird das Fenster bewegt. Die Modellkoeffizienten werden durch Bewegen des Fensters rekursiv durch Verwendung der Modellkoeffizienten bestimmt.

Die DE 10 2008 010 102 A1 betrifft ein Verfahren zur Adaption von mechanischen Toleranzen eines Geberrades einer Sensoreinrichtung einer Brennkraftmaschine eines Hybridantriebs eines Fahrzeugs. Während eines Adaptionsbetriebs wird die Brennkraftmaschine in einer Betriebsart betrieben, in welcher die Brennkraftmaschine mittels eines Elektromotors angetrieben wird und dabei der Brennkraftmaschine kein Kraftstoff zugeführt wird. Somit wird die Brennkraftmaschine konstant betrieben, so dass das Geberrad eine konstante Drehzahl aufweist. Werden zeitliche Abweichungen der Periodenfolgen des Geberrades festgestellt, lässt sich in dieser Betriebsart darauf schließen, dass diese Toleranzen vom Geberrad herrühren.

Die EP 0 696 355 B1 offenbart eine Adaptionsvorrichtung für ein Geberrad an einem Verbrennungsmotor. Die Vorrichtung umfasst einen Messwertaufnehmer, welcher so in Bezug auf das Geberrad ausgerichtet ist, dass er bei jeder Segmentbegrenzung des Geberrades ein Messsignal ausgibt. Eine jeweilige Segmentlänge-Berechnungseinheit bestimmt aus zwei aufeinanderfolgenden Messsignalen die Segmentlänge des zugeordneten Segments und gibt einen entsprechenden Segmentlängenwert aus. Eine jeweilige Mittelungseinrichtung mittelt für jedes Segment die Segmentlängenwerte für das zugeordnete Segment zu einem Adaptionswert.

Die DE 101 07 892 B4 betrifft ein Verfahren zur Identifikation des Geberradfehlers im Fahrbetrieb. Dabei wird mit Hilfe des Geberrades und eines Sensors für jedes Geberradsegment eine Winkelgeschwindigkeit bestimmt. Die Fehleridentifikation erfolgt im Schubbetrieb des Motors. Ausgehend von der kinetischen Energie der Kurbelwelle wird für jedes Segment des Geberrades ein Fehlerwert aus einer Verfahrensgleichung ermittelt. In die Verfahrensgleichung geht die gemessene fehlerbehaftete Winkelgeschwindigkeit und der Fehlerwert als differenzieller Winkelfehler, das Massenträgheitsmoment der Kurbelwelle, und die kinetische Energie in einem über dem Kurbelwinkel konstanten, drehzahlabhängigen Anteil und einem gasmomentabhängigen Anteil ein.

Die DE 102 17 560 A1 betrifft ein Verfahren zur Bestimmung von Geometriefehlern eines Geberrades mit einer Vielzahl von sensoriell erfassbaren Inkrementen für einen Verbrennungsmotor. Das Drehgeberrad ist an einer Welle des Verbrennungsmotors angebracht. Bei dem Verfahren werden bei einer zeitlich veränderlichen Wellendrehzahl eine Messung des Winkelgeschwindigkeitsverlaufs der Welle sowie eine Mittelung über die bei der Messung gewonnenen arbeitspielsynchronen Wellendrehzahlsignale durchgeführt. Die Mittelung wird innerhalb eines Wellendrehzahlbereichs durchgeführt, in welchem sich die im Verbrennungsmotor auf die Welle einwirkenden Gas- und Massenmomente gegenseitig zumindest weitgehend statistisch aufheben.

Die DE 103 18 839 B3 betrifft ein Verfahren zur Bestimmung eines Korrekturwertes für eine gemessene Segmentzeit. Ein zylinderindividueller Korrekturwert wird auf der Grundlage der Anzahl der Zylinder der Brennkraftmaschine, einer gemessenen Segmentzeit des Zylinders, einer gemessenen Segmentzeit eines Bezugssegments eines Bezugszylinders, und einer weiteren gemessenen Segmentzeit des Bezugssegments des Bezugszylinders, welche nach zwei Kurbelwellenumdrehungen nach der Segmentzeit des Bezugssegments des Bezugszylinders gemessen wurde, bestimmt. Der zylinderindividuelle Korrekturwert ermöglicht die Bestimmung unabhängig davon, ob eventuelle Drehzahlgradienten vorhanden sind.

Die in dem Stand der Technik bekannten Verfahren weisen eine begrenzte Genauigkeit auf und erfordern zum Teil einen erheblichen Rechenaufwand, welcher im laufenden Betrieb der Brennkraftmaschine aufzuwenden ist.

Aufgabe der vorliegenden Erfindung ist es daher, eine möglichst genaue Bestimmung eines Geberradfehlers einer Brennkraftmaschine zu ermöglichen, welche im Betrieb der Brennkraftmaschine einfach und somit schnell und kostengünstig durchführbar ist.

Gemäß der vorliegenden Erfindung wird diese Aufgabe durch ein Verfahren zur automatischen Bestimmung eines Geberradfehlers einer Brennkraftmaschine nach Anspruch 1, eine Vorrichtung zur Bestimmung eines Geberradfehlers einer Brennkraftmaschine nach Anspruch 10 und nach Anspruch 12 und ein Fahrzeug nach Anspruch 14 gelöst. Die abhängigen Ansprüche definieren bevorzugte und vorteilhafte Ausführungsformen der Erfindung.

Gemäß der vorliegenden Erfindung wird ein Verfahren zu automatischen Bestimmung eines Geberradfehlers einer Brennkraftmaschine bereitgestellt. Die Brennkraftmaschine weist ein Geberrad und einen Geberradsensor auf. Das Geberrad ist an einer Welle der Brennkraftmaschine angebracht. Der Geberradsensor ist mit Hilfe des Geberrades in der Lage, mehrere vorbestimmte Drehwinkel der Welle zu erfassen. Bei dem Verfahren wird ein Drehzahlmodell der Brennkraftmaschine bereitgestellt, welches für mehrere vorbestimmte Drehwinkel eines Arbeitsspiels der Brennkraftmaschine jeweils eine Modelldrehzahl bereitstellt. Weiterhin wird für mehrere der vorbestimmten Drehwinkel des Arbeitsspiels mittels des Geberrads und des Geberradsensors eine jeweilige Drehzahl bestimmt. Aus dem Drehzahlmodell, den erfassten Drehzahlen für die mehreren vorbestimmten Winkel des Arbeitsspiels und der Bedingung, dass die Summe über alle bestimmten Geberradfehler einer Umdrehung null ist, wird der Geberradfehler für mindestens einen der vorbestimmten Drehwinkel des Arbeitsspiels bestimmt.

Das Geberrad kann beispielsweise an einer Kurbelwelle der Brennkraftmaschine angebracht sein und entlang seines Umfangs mit Zähnen versehen sein. Der Geberradsensor kann beispielweise derart ausgestaltet sein, dass er induktiv, optisch oder unter Verwendung des Hall-Effekts elektrische Signale bereitstellt, welche mit an dem Geberradsensor vorbeilaufenden Zähnen des Geberrades korrespondieren.

Indem das Drehzahlmodell für die mehreren vorbestimmten Drehwinkel eines Arbeitsspiels der Brennkraftmaschine jeweils eine entsprechende Modelldrehzahl bereitstellt, kann durch in Bezug setzen der Modelldrehzahlen und der mit Hilfe des Geberrads und des Geberradsensors bestimmten tatsächlichen Drehzahlen ein Geberradfehler bestimmt werden. Mit der zusätzlichen Bedingung, dass die Summe über alle Geberradfehler null ist, d.h., dass die Summe aller Geberradfehler für alle vorbestimmten Drehwinkel null ist, können Ungenauigkeiten des Drehzahlmodells ausgeglichen werden und die Genauigkeit des bestimmten Geberradfehlers erhöht werden.

Gemäß einer Ausführungsform werden mit Hilfe des Drehzahlmodells mehrere Koeffizienten, sogenannte Filterkoeffizienten, derart bestimmt, dass der Geberradfehler für einen vorbestimmten Drehwinkel bestimmt wird, indem eine mit den Koeffizienten gewichtete Summe der erfassten Drehzahlen bestimmt wird. Die mehreren Koeffizienten können beispielsweise während einer Entwicklung oder Fertigung der Brennkraftmaschine bestimmt werden und die mit den Koeffizienten gewichtete Summe kann während eines Betriebs der Brennkraftmaschine bestimmt werden. Dadurch sind während des Betriebs der Brennkraftmaschine nur einfache arithmetische Operationen zur Bestimmung des Geberradfehlers notwendig, so dass der Geberradfehler im Betrieb der Brennkraftmaschine mit einer kostengünstigen Recheneinheit einfach und genau bestimmt werden kann.

Gemäß einer weiteren Ausführungsform werden für mehrere Geberradfehler für mehrere der vorbestimmten Drehwinkel des Arbeitsspiels jeweils die mehreren Koeffizienten bestimmt und eine Symmetrieeigenschaft der Koeffizienten untereinander derart ausgenutzt, dass nur nicht redundante Koeffizienten zur Verwendung während des Betriebs der Brennkraftmaschine in der Recheneinheit gespeichert werden. In Abhängigkeit von dem verwendeten Drehzahlmodell, wovon nachfolgend einige Ausführungsformen beschrieben werden, können die Koeffizienten für die unterschiedlichen Geberradfehler für die unterschiedlichen Drehwinkel des Arbeitsspiels gewisse Symmetrieeigenschaften aufweisen. Da die Koeffizienten bereits bei der Entwicklung oder Fertigung der Brennkraftmaschine bestimmt werden können, können diese Symmetrieeigenschaften zur platzsparenden Speicherung der Koeffizienten verwendet werden. Dadurch kann Speicherplatz in der Recheneinheit von einer Motorelektronik, welche die Geberradfehler zur Laufzeit der Brennkraftmaschine mit Hilfe der Koeffizienten bestimmt, eingespart werden.

Gemäß einer weiteren Ausführungsform werden die jeweiligen Modelldrehzahlen für einen jeweiligen vorbestimmten Drehwinkel des Arbeitsspiels jeweils als eine Teilsumme einer Fourier-Reihe modelliert. Die Grundfrequenz der Fourier-Reihe entspricht dabei der Frequenz des Arbeitsspiels der Brennkraftmaschine. Die Teilsumme der Fourier-Reihe kann beispielsweise Polynome der Grundfrequenz, der doppelten Grundfrequenz, der dreifachen Grundfrequenz, der vierfachen Grundfrequenz und/oder der achtfachen Grundfrequenz umfassen. Bei einer Viertaktbrennkraftmaschine hat das Arbeitsspiel einen Kurbelwellenwinkel von 720 Grad und entspricht der Grundfrequenz der Fourier-Reihe. Die doppelte Grundfrequenz entspricht somit einem Kurbelwellenwinkel von 360 Grad, die vierfache Grundfrequenz einem Kurbelwellenwinkel von 180 Grad und die achtfache Grundfrequenz einem Kurbelwellenwinkel von 90 Grad. Somit umfasst die Fourier-Reihe bei einem Vierzylindermotor Frequenzkomponenten bis zur doppelten Zündfrequenz. Alle darüber hinausgehenden Frequenzen werden als Komponenten angesehen, welche nicht durch die Drehung der Brennkraftmaschine verursacht werden, sondern durch die Geberradfehler bedingt sind.

Gemäß einer weiteren Ausführungsform wird die jeweilige Modelldrehzahl für einen jeweiligen vorbestimmten Drehwinkel des Arbeitsspiels mit Hilfe eines physikalischen Modells auf der Grundlage eines Druckverlaufs in einem Zylinder der Brennkraftmaschine bestimmt. Ein derartiges physikalisches Modell kann beispielsweise die Drehzahl direkt aus dem Verbrennungsdruck bestimmen, indem aus dem Verbrennungsdruck eine Kraft auf die Kolben der Brennkraftmaschine und daraus mit Hilfe der Kurbelkinematik ein Moment an der Kurbelwelle bestimmt wird. Aus dem Moment kann die Winkelbeschleunigung der Kurbelwelle und daraus eine Drehzahl der Kurbelwelle bestimmt werden. Zur Vereinfachung kann auch auf der Grundlage des Gaswechselmoments ein entsprechendes physikalisches Drehzahlmodell bestimmt werden, aus welchem wie zuvor beschrieben Koeffizienten bestimmt werden können, die während des Betriebs der Brennkraftmaschine eine Bestimmung des Geberradfehlers über eine mit den Koeffizienten gewichtete Summe der erfassten Drehzahlen ermöglicht.

Ein Arbeitsspiel der Brennkraftmaschine kann beispielsweise bei einer Viertaktbrennkraftmaschine 720 Grad Kurbelwellenumdrehung umfassen. Das Geberrad kann beispielsweise derart ausgestaltet sein, dass vorbestimmte Drehwinkel der Kurbelwelle in einem 6 Grad-Raster erfasst werden können. Auf der Grundlage des Drehzahlmodells können beispielsweise 120 Koeffizienten bestimmt werden, welche zum Gewichten von 120 erfassten Drehzahlwerten verwendet werden, welche im 6 Grad-Raster während eines Arbeitsspiels von 720 Grad erfasst werden. Aufgrund der Symmetrieeigenschaft der Koeffizienten kann die Anzahl von 120 Koeffizienten beispielsweise bei Verwendung des zuvor beschriebenen Fourier-Reihen-Drehzahlmodells auf 31 Koeffizienten verringert werden, welche in geeigneter Art und Weise zum Gewichten der 120 erfassten Drehzahlen zum Bestimmen der Geberradfehler verwendet werden können.

Gemäß der vorliegenden Erfindung wird weiterhin eine Vorrichtung zur Bestimmung eines Geberradfehlers einer Brennkraftmaschine bereitgestellt. An einer Welle, beispielsweise einer Kurbelwelle, der Brennkraftmaschine ist ein Geberrad angebracht und die Brennkraftmaschine weist einen Geberradsensor auf, welcher mit Hilfe des Geberrades in der Lage ist, mehrere vorbestimmte Drehwinkel der Welle zu erfassen. Die Vorrichtung umfasst eine Verarbeitungseinheit, welche mit dem Geberradsensor gekoppelt ist und ausgestaltet ist, ein Drehzahlmodell bereitzustellen, welches für mehrere vorbestimmte Drehwinkel eines Arbeitsspiels der Brennkraftmaschine jeweils eine Modelldrehzahl bereitstellt. Die Verarbeitungseinheit ist weiterhin ausgestaltet, eine jeweilige Drehzahl für mehrere der vorbestimmten Drehwinkel des Arbeitsspiels mit Hilfe des Geberrads und des Geberradsensors zu bestimmen und den Geberradfehler für mindestens einen der vorbestimmten Drehwinkel des Arbeitsspiels aus dem Drehzahlmodell, den erfassten Drehzahlen für die mehreren vorbestimmten Winkel des Arbeitsspiels und der Bedingung, dass die Summe über alle bestimmten Geberradfehler null ist, zu bestimmen. Die Vorrichtung kann weiterhin derart ausgestaltet sein, dass sie das zuvor beschriebene Verfahren oder eine seiner Ausführungsformen ausführt und umfasst daher auch die zuvor beschriebenen Vorteile.

Erfindungsgemäß wird weiterhin eine Vorrichtung zur Bestimmung eines Geberradfehlers einer Brennkraftmaschine bereitgestellt, die eine Verarbeitungseinheit und einen Koeffizientenspeicher umfasst. Die Brennkraftmaschine weist ein an einer Welle der Brennkraftmaschine angebrachtes Geberrad und einen Geberradsensor auf und der Geberradsensor ist mit Hilfe des Geberrades in der Lage, mehrere vorbestimmte Drehwinkel der Welle zu erfassen. In dem Koeffizientenspeicher sind mehrere Koeffizienten gespeichert, welche mit Hilfe eines Drehzahlmodells der Brennkraftmaschine und der Bedingung, dass die Summe über alle Geberradfehler einer Umdrehung der Brennkraftmaschine null ist, bestimmt wurden. Das Drehzahlmodell stellt für mehrere vorbestimmte Drehwinkel des Arbeitsspiels jeweils eine Modelldrehzahl bereit. Die Verarbeitungseinheit ist mit dem Geberradsensor und dem Koeffizientenspeicher gekoppelt und ausgestaltet, für mehrere der vorbestimmten Drehwinkel des Arbeitsspiels jeweils eine Drehzahl mit Hilfe des Geberrads und des Geberradsensors zu bestimmen. Weiterhin ist die Verarbeitungseinheit ausgestaltet, den Geberradfehler für mindestens einen der vorbestimmten Drehwinkel des Arbeitsspiels mit Hilfe einer mit den Koeffizienten gewichteten Summe der erfassten Drehzahlen zu bestimmen.

Weiterhin kann die Vorrichtung zur Durchführung des zuvor beschriebenen Verfahrens oder einer seiner Ausführungsformen ausgestaltet sein und umfasst daher die zuvor beschriebenen Vorteile.

Die vorliegende Erfindung wird nachfolgend unter Bezugnahme auf die beigefügten Zeichnungen anhand bevorzugter Ausführungsformen erläutert werden.

Fig. 1 zeigt schematisch eine Vorrichtung zur Bestimmung eines Geberradfehlers einer Brennkraftmaschine gemäß einer Ausführungsform der vorliegenden Erfindung.

Fig. 2 zeigt Koeffizientenwerte zum Bestimmen eines Geberradfehlers, welche gemäß einer Ausführungsform des Verfahrens der vorliegenden Erfindung bestimmt wurden.

Fig. 3 zeigt schematisch einen Druckverlauf in einem Zylinder der Brennkraftmaschine, ein sich daraus ergebendes Gaswechselmoment und eine sich daraus ergebende normierte Drehzahl, welche für ein physikalisches Modell verwendet werden, um einen Geberradfehler gemäß der vorliegenden Erfindung zu bestimmen.

Fig. 4 zeigt ein normiertes Trägheitsmoment abgeleitet nach dem Kurbelwellenwinkel aus oszillierenden Massen für ein ganzes Arbeitsspiel einer Brennkraftmaschine, welches in einem physikalischen Modell zur Bestimmung eines Geberradfehlers gemäß einem Verfahren der vorliegenden Erfindung verwendet wird.

Fig. 5 zeigt Werte zur Korrektur von Rohdrehzahlwerten auf der Grundlage einer Massen-Kraftkorrektur, wobei die Massen-Kraft-korrigierte Drehzahl bei einem Verfahren zur Bestimmung eines Geberradfehlers gemäß einer Ausführungsform der vorliegenden Erfindung verwendet werden kann.

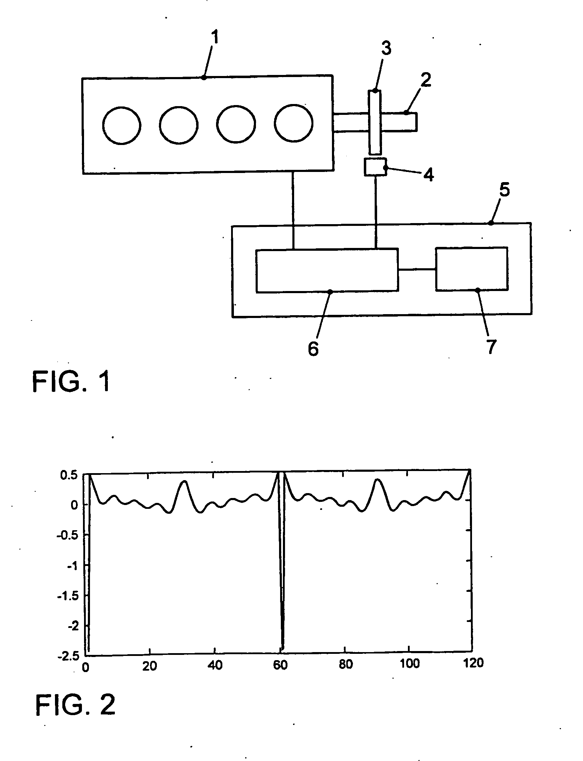

Fig. 1 zeigt eine Brennkraftmaschine 1, an welcher an einer Welle 2 ein Geberrad 3 angebracht ist, welches sich im Betrieb der Brennkraftmaschine 1 zusammen mit der von der Brennkraftmaschine 1 angetriebenen Welle 2 dreht. Die Brennkraftmaschine 1 ist beispielsweise ein Vierzylindermotor, wobei jedoch die nachfolgend beschriebene erfindungsgemäße Vorrichtung und das nachfolgend beschriebene erfindungsgemäße Verfahren in gleicher Art und Weise für beliebige andere Brennkraftmaschinen mit einer anderen Anzahl von Zylindern anwendbar ist. Das Geberrad 3 kann beispielsweise ein sogenanntes 60-2-Geberrad sein, an dessen Umfang 58 Zähne im Abstand von jeweils 6 Grad vorgesehen sind. An einer Stelle entlang des Umfangs ergibt sich somit eine größere Lücke, in welcher zwei Zähne "fehlen". Diese größere Lücke dient zur Bestimmung einer absoluten Position des Geberrades 3. Das Geberrad 3 kann beispielsweise an einer Kurbelwelle 2 der Brennkraftmaschine 1 angebracht sein. Alternativ kann das Geberrad 3 auch beispielsweise an einer Nockenwelle der Brennkraftmaschine 1 angebracht sein. Ein Geberradsensor 4 ist derart ortsfest an der Brennkraftmaschine 1 angebracht, dass er im Betrieb der Brennkraftmaschine 1 eine Drehung des Geberrades 3 erfasst, indem der Geberradsensor 4 physikalische Größen erfasst, welche sich aufgrund der an dem Geberradsensor 4 vorbeilaufenden Zähne und Zahnlücken des Geberrades 3 ändern. Diese physikalischen Größen können beispielsweise eine Induktivität, eine Kapazität oder einen magnetischen Fluss umfassen. Der Geberradsensor 4 ist mit einer Vorrichtung 5 zur Bestimmung eines Geberradfehlers gekoppelt. Die Vorrichtung 5 kann beispielsweise Teil einer Motorelektronik oder eines Steuergeräts der Brennkraftmaschine 1 sein. Die Vorrichtung 5 umfasst eine Verarbeitungseinheit 6, beispielsweise eine Mikroprozessorsteuerung, und einen Arbeitsspeicher 7, welcher mit der Verarbeitungseinheit 6 gekoppelt ist. Der Arbeitsspeicher 7 kann einen Festwertspeicher umfassen, in welchem vorbestimmte Parameter, insbesondere nachfolgend beschriebene Koeffizienten, dauerhaft, d.h. persistent, gespeichert werden können.

Aufgrund von mechanischen Toleranzen des Geberrades 3, beispielsweise Teilungsfehlern der Zähne des Geberrads 3 oder Anbaufehler des Geberrads 3 an der Welle 2, können Winkelpositionen, Winkelgeschwindigkeiten und Drehzahlen der Welle 2, welche mit Hilfe des Geberradsensors 4 erfasst und der Vorrichtung 5 bestimmt werden, Toleranzen oder Verfälschungen aufweisen. Zum Korrigieren der über einen Zahn des Geberrades 3 bestimmten Drehzahl bzw. Winkelgeschwindigkeit ist die gemessene Winkelgeschwindigkeit $\dot{\varphi}_{gemessen}$ gemäß der nachfolgenden Gleichung (1) mit dem Geberradfehler $\Delta\varphi$ des entsprechenden Geberads 3 zu korrigieren, woraus sich die korrigierte Winkelgeschwindigkeit $\dot{\varphi}_{korrigiert}$ ergibt:

$$\dot{\varphi}_{korrigiert} = \dot{\varphi}_{gemessen}\left(1 + \frac{\Delta\varphi}{6}\right) \qquad\qquad (1)$$

Um den Fehler $\Delta\varphi$ eines Zahns des Geberrads 3 zu bestimmen, wird die korrigierte Drehzahl $\dot{\varphi}_{korrigiert}$ durch eine Modelldrehzahl $\dot{\varphi}_{Modell}$ ersetzt, welche aus einem Drehzahlmodell für die Brennkraftmaschine 1 für den vorbestimmten Drehwinkel, an dem sich der entsprechende Zahn befindet, eine entsprechende Modelldrehzahl bereitstellt.

Aus Vereinfachungsgründen wird weiterhin für den Korrekturterm $\Delta\varphi/6$ eine mittlere Drehzahl $\overline{\dot{\varphi}}$ angesetzt. Somit ergibt sich aus Gleichung (1) die nachfolgende Beziehung der Gleichung (2):

$$\dot{\varphi}_{gemessen} \approx \dot{\varphi}_{Modell} - \overline{\dot{\varphi}} \cdot \frac{\Delta\varphi}{6} \qquad\qquad (2).$$

Gemäß einer ersten Ausführungsform wird für die Modelldrehzahl eine Fourier-Reihe angesetzt. Unter der Annahme einer Brennkraftmaschine, welche nach dem Viertaktprinzip arbeitet, ergibt sich für die Fourier-Reihe eine Grundfrequenz von 1/720 Grad Kurbelwellenwinkel, d.h., dass sich ein Arbeitsspiel der Brennkraftmaschine 1 nach zwei Umdrehungen der Kurbelwelle wiederholt. Die allgemeine Darstellung der Fourier-Reihe für die Modelldrehzahl $\dot{\varphi}_{Modell}$ zeigt die nachfolgende Gleichung (3):

$$\dot\varphi_{\mathrm{Modell}} = \frac{A_0}{2} + \sum_{k=1}^{n}\left[A_k\cos\left(\frac{2\pi k}{720}\varphi\right) + B_k\sin\left(\frac{2\pi k}{720}\varphi\right)\right] \tag{3}$$

Die Koeffizienten $A_0$, $A_k$ und $B_k$ sind jedoch im Allgemeinen nicht bekannt. Aufgrund der Arbeitsweise der Brennkraftmaschine 1 (Viertaktprinzip) und der bekannten Anzahl der Zylinder der Brennkraftmaschine 1, beispielsweise vier Zylinder, können jedoch Annahmen über relevante Oberwellenanteile der Modelldrehzahl $\dot\varphi_{\mathrm{Modell}}$ getroffen werden. Bei einem Vierzylindermotor sind beispielsweise Oberwellen bis zur doppelten Zündfrequenz signifikant, d.h., die Terme der Gleichung (3) für k=1, 2, 3, 4 und 8 sind von besonderer Relevanz. Dadurch kann die Reihenentwicklung der Gleichung (3) entsprechend vereinfacht werden.

Bei dem oben angenommenen Geberrad mit 6 Grad-Teilung ergibt sich für das oben genannte 720 Grad-Arbeitsspiel für die Modelldrehzahl $\dot\varphi$ für jeden Zahn folgende Gleichung (4):

$$\begin{pmatrix}\dot\varphi(0)\\ \dot\varphi(6)\\ \vdots\\ \dot\varphi(714)\end{pmatrix} = \begin{pmatrix}\cos\left(2\pi\cdot\frac{1}{720}\cdot 0\right) & \cos\left(2\pi\cdot\frac{2}{720}\cdot 0\right) & \cdots & \sin\left(2\pi\cdot\frac{n}{720}\cdot 0\right) & 1\\ \cos\left(2\pi\cdot\frac{1}{720}\cdot 6\right) & \cos\left(2\pi\cdot\frac{2}{720}\cdot 6\right) & \cdots & \sin\left(2\pi\cdot\frac{n}{720}\cdot 6\right) & 1\\ \vdots & \vdots & \vdots & \vdots & \vdots\\ \cos\left(2\pi\cdot\frac{1}{720}\cdot 714\right) & \sin\left(2\pi\cdot\frac{2}{720}\cdot 714\right) & \cdots & \sin\left(2\pi\cdot\frac{n}{720}\cdot 714\right) & 1\end{pmatrix}\cdot\begin{pmatrix}A_1\\ A_2\\ \vdots\\ B_n\\ \frac{A_0}{2}\end{pmatrix} \tag{4}$$

welches mit den entsprechenden Vektoren b und x und der Matrix A der Gleichung (4a) entspricht:

$$b = A\cdot x \tag{4a}$$

Durch Einsetzen der Gleichungen (4) in die Gleichung (2) und zusätzlicher Einbeziehung einer Nebenbedingung ergibt sich die nachfolgende Gleichung (5):

$$\begin{pmatrix}\dot\Phi_{gemessen}\\ 0\\ 0\end{pmatrix} = \begin{pmatrix}A & \begin{pmatrix}G\\ G\end{pmatrix}\\ 0 & w_1\cdot I\\ 0 & w_2\end{pmatrix}\cdot\begin{pmatrix}x\\ \Delta\Phi\end{pmatrix} = R\cdot p \tag{5}$$

Dabei ist $\dot\Phi_{gemessen}$ ein Vektor der gemessenen Drehzahlen $\dot\varphi_{gemessen}$ für jeden Zahn des Geberrads 3, A die mittlere Matrix der Gleichung (4), G eine Diagonalmatrix mit dem Term $-\overline{\dot\varphi}/6$ aus der Gleichung (2), x der rechte Vektor der Gleichung (4) und $\Delta\Phi$ ein Vektor der Geberradfehler $\Delta\varphi$ für jeden Zahn des Geberrades 3. Die Diagonalmatrix G ist zweimal enthalten, da ein ganzes Arbeitsspiel, d.h. zwei Kurbelwellenumdrehungen, betrachtet werden. Die Nebenbedingung besagt, dass alle Fehler 0 sein sollten. Die Nebenbedingung wird benötigt, um den vollen Matrixrang zu erreichen. Die Nebenbedingung wird mit dem skalaren Faktor $w_1$ gewichtet, wodurch ein Maß für die Vertrauenswürdigkeit des Drehzahlmodells eingestellt werden kann. Die letzte Zeile des Gleichungssystems (5) besagt, dass die Summe aller Einzelfehler $\Delta\varphi$ null ergeben muss, da sich die Zahnfehler des Geberrads 3 über eine gesamte Umdrehung in Summe aufheben müssen. Diese Bedingung, dass die Summe aller Einzelfehler null ergeben muss, kann mit $w_2$ gewichtet werden. I ist dabei eine Einheitsmatrix von beispielsweise der Größe 60x60.

Um das Gleichungssystem der Gleichung (5) in der Vorrichtung 5, beispielsweise einem Steuergerät der Brennkraftmaschine 1, zu berechnen, sind ein erheblicher Speicherplatz und eine erhebliche Rechenleistung erforderlich, welche in üblichen Steuergeräten nicht verfügbar sind. Indem das Gleichungssystem (5) durch $\overline{\dot{\varphi}}$ dividiert wird, enthalten die Matrizen G jeweils nur noch den Wert -1/6 auf den Hauptdiagonalen, wodurch die Matrix R unabhängig von der mittleren Drehzahl $\overline{\dot{\varphi}}$ ist und somit unabhängig von einem Arbeitspunkt der Brennkraftmaschine 1 invertierbar ist. Die invertierte Matrix $R_{inv}$ ergibt sich aus Gleichung (6):

$$R_{inv} = \left(R^T R\right)^{-1} R^T \tag{6}$$

Gleichung (7) zeigt den Aufbau der Matrix $R_{inv}$:

$$R_{inv} = \begin{pmatrix} R_x \\ R_{\Delta\Phi} \end{pmatrix} \tag{7}$$

Die ersten Zeilen $R_x$ der Matrix $R_{inv}$ gehören zur Berechnung der Fourier-Koeffizienten $A_k$, $B_k$ (skaliert mit $\overline{\dot{\varphi}}$) und die letzten 60 Zeilen ($R_{\Delta\Phi}$) und ersten 120 Spalten gehören zur Berechnung der Winkelfehler $\Delta\varphi$.

Somit wird der Geberradfehler $\Delta\Phi$ über ein Skalarprodukt mit 120 Koeffizienten ($R_{\Delta\Phi}$) der gemessenen Drehzahlen ($\dot{\Phi}_{gemessen}$) berechnet, wie in Gleichung (8) dargestellt:

$$\Delta\Phi = R_{\Delta\Phi} \cdot \dot{\Phi}_{gemessen} / \overline{\dot{\varphi}} \tag{8}$$

Zu einem Zahn des Geberrads 3 gehört dabei immer eine Zeile der Matrix $R_{\Delta\varphi}$. Dabei sind die Koeffizienten für alle Zahnfehler gleich, allerdings jeweils um eine Stelle gegenüber dem vorhergehenden Zahn verschoben. Daher ist es ausreichend, 120 verschiedene Koeffizienten für alle Zahnfehler zu speichern, welche dann in geeigneter Art und Weise zur Bestimmung der jeweiligen Zahnfehler verwendet werden. Darüber hinaus sind die Koeffizienten in großen Teilen symmetrisch, so dass man bei genauerer Betrachtung sogar nur 31 unterschiedliche Koeffizienten in dem Koeffizientenspeicher 7 der Vorrichtung 5 benötigt. Fig. 2 zeigt exemplarisch 120 Koeffizienten für einen Zahnfehler des Geberrads 3. Aus Fig. 2 ist auch die Symmetrieeigenschaft der Koeffizienten ersichtlich, wodurch die Anzahl der Koeffizienten auf nahezu ein Viertel verringert werden kann.

Jeder auf die zuvor beschriebene Art und Weise bestimmte Zahnfehler für einen Zahn des Geberrads 3 wird über mehrere Arbeitsspiele der Brennkraftmaschine 1 bestimmt und beispielsweise mit Hilfe eines sogenannten PT1-Filters mit einem Lernfaktor w gemäß der nachfolgenden Gleichungen (9) und (10) weiter verbessert, wobei k die zur Iteration verwendeten Arbeitsspiele zählt.

$$\Delta\varphi_{\tilde{k}} = \text{FilterKoeffs} \cdot \frac{\dot{\Phi}_{k-1}}{\overline{\dot{\varphi}}} \tag{9}$$

$$\Delta\varphi_k = \Delta\varphi_{k-1} + w \cdot \Delta\varphi_{\tilde{k}} \tag{10}$$

Die so bestimmten Zahnfilter $\Delta\varphi_k$ können dann gemäß Gleichung (11) verwendet werden, um aus der gemessenen Drehzahl $\dot{\varphi}_{gemessen}$ die eigentliche Drehzahl $\dot{\varphi}_k$ des Zahns k zu bestimmen.

$$\dot{\varphi}_k = \dot{\varphi}_{gemessen} \cdot \left(1 + \frac{\Delta\varphi_k}{6}\right) \qquad\qquad (11)$$

Für eine effiziente Berechnung in der Vorrichtung 5 wird die Division durch 6 vorzugsweise schon in den Filterkoeffizienten vorgenommen. Somit sind in der Vorrichtung 5 neben der Division durch die mittlere Drehzahl $\overline{\dot{\varphi}}$ nur noch Additionen und Multiplikationen durchzuführen. Bei der iterativen Bestimmung der Zahnfehler über mehrere Arbeitsspiele wird jeweils schon auf die im vorhergehenden Schritt korrigierte Drehzahl zurückgegriffen, wodurch der gefilterte Fehler $\Delta\overline{\varphi_k}$ immer kleiner wird.

Gemäß einer weiteren Ausführungsform kann das Drehzahlmodell der Brennkraftmaschine 1 statt auf der zuvor beschriebenen Fourier-Reihe alternativ auf einem physikalischen Ansatz beruhen. Grundlage dafür ist eine Berechnung der Drehzahl direkt aus dem Verbrennungsdruck, indem aus dem Druck eine Kraft auf die Kolben bestimmt wird und daraus zusammen mit der Kurbelkinematik ein Moment auf die Welle 2 bestimmt wird. Aufgrund des Moments wird die Winkelbeschleunigung der Welle 2 und daraus die Drehzahl ermittelt. Da eine Berechnung der Drehzahl aus dem Verbrennungsdruck jedoch verhältnismäßig aufwändig ist und daher in üblichen Steuergeräten nicht in Echtzeit durchführbar ist, werden folgende Vereinfachungen durchgeführt, um das Drehzahlmodell im Wesentlichen auf Linearkombinationen von Funktionen zu reduzieren.

Die Drehzahl setzt sich prinzipiell aus drei Anteilen zusammen, die aus der Verbrennungskraft und aus dem Trägheitsmoment der oszillierenden Massen, wie z.B. der Kolben und Pleuel, stammen. Gleichung (12) beschreibt das sogenannte Gaswechselmoment und verdeutlicht diesen Zusammenhang:

$$\tilde{M}_{Gas} = \alpha \cdot \Theta + \frac{1}{2}\Theta'\cdot\omega^2 \qquad\qquad (12)$$

mit dem Gaswechselmoment $\tilde{M}_{Gas}$, der Beschleunigung $\alpha$, dem Trägheitsmoment $\Theta$ der Kurbelwelle und der Winkelgeschwindigkeit $\omega$. Das Trägheitsmoment $\Theta$ setzt sich aus einem Gleich- und einem Wechselanteil zusammen und ändert sich somit im Verlauf einer Kurbelwellenumdrehung. Der Term $\frac{1}{2}\Theta'\cdot\omega^2$ beschreibt den Momentenanteil, der durch die oszillierenden Massen hervorgerufen wird. Dieser nimmt quadratisch mit der Drehzahl $\omega$ zu. Die Modelldrehzahl $\dot{\varphi}_{Modell}$ wird durch Integrieren der Beschleunigung $\alpha$ aus Gleichung (12) bestimmt und ergibt sich gemäß Gleichung (13) zu:

$$\dot{\varphi}_{Modell} = K_1 \cdot \int\tilde{M}_{Gas} + K_2 \cdot \int\Theta' + K_3 \qquad\qquad (13),$$

wobei $K_1$ und $K_2$ über die gemessene Drehzahl zu schätzende Faktoren sind, in denen unter anderem das Reziproke des Trägheitsmoments (in $K_1$ und $K_2$) und das Quadrat der mittleren Drehzahl (in $K_2$) eingehen. Mit $K_3$ wird ein Offset geschätzt. Mit der Modellfunktion nach Gleichung (13) kann eine theoretische stationäre Drehzahl sehr gut angenähert werden. Reale gemessene Drehzahlen sind jedoch nicht immer stationär und ändern ihre Phasenlage bedingt durch unterschiedliche Phasenlagen der Verbrennung, insbesondere bedingt durch die Verbrennungsschwerpunktlage $\alpha_{50}$. Um diese unterschiedlichen Phasenlagen zu berücksichtigen, wird der erste Term der Gleichung (13), der das Gaswechselmoment $\tilde{M}_{Gas}$ beinhaltet und maßgeblich durch die Verbrennung beeinflusst wird, in zwei Drehzahlmodellfunktionen aufgeteilt. Eine erste Drehzahlmodellfunktion wird für eine sehr frühe Verbrennungsschwerpunktlage bestimmt und eine zweite Drehzahlmodellfunktion wird für eine sehr späte Verbrennungsschwerpunktlage bestimmt. Darüber hinaus kann noch eine Anstiegsfunktion M mit aufgenommen werden, um einen linearen Anstieg oder einen linearen Abfall im Drehzahlverlauf innerhalb eines Arbeitsspiels mitzuschätzen. Daraus ergibt sich eine Drehzahlmodellfunktion gemäß Gleichung (14):

$$\dot{\varphi}_{Modell} = K_1^{Früh} \cdot \int \widetilde{M}_{Gas}^{Früh} + K_1^{Spät} \cdot \int \widetilde{M}_{Gas}^{Spät} + K_2 \cdot \int \Theta' + K_3 \cdot M + K_4 \qquad (14)$$

Die Drehzahlmodellfunktion gemäß Gleichung (14) wird ähnlich wie bei dem zuvor beschriebenen Fourier-Reihenverfahren in eine entsprechende Matrixdarstellung für ein Arbeitsspiel der Brennkraftmaschine 1 vergleichbar zu Gleichung (4) überführt. Wie zuvor im Zusammenhang mit Gleichungen (5)-(8) beschrieben, können dann daraus für jeden Zahnfehler 120 Koeffizienten bestimmt werden, welche gemäß Gleichung (8) zur Bestimmung einzelner Zahnfehler oder aller Zahnfehler des Geberrads 3 verwendet werden können. Üblicherweise unterscheiden sich nun jedoch die Koeffizienten zwischen den einzelnen Zähnen, so dass für jeden Zahn 120 eigene Koeffizienten in dem Koeffizientenspeicher 7 abzulegen sind.

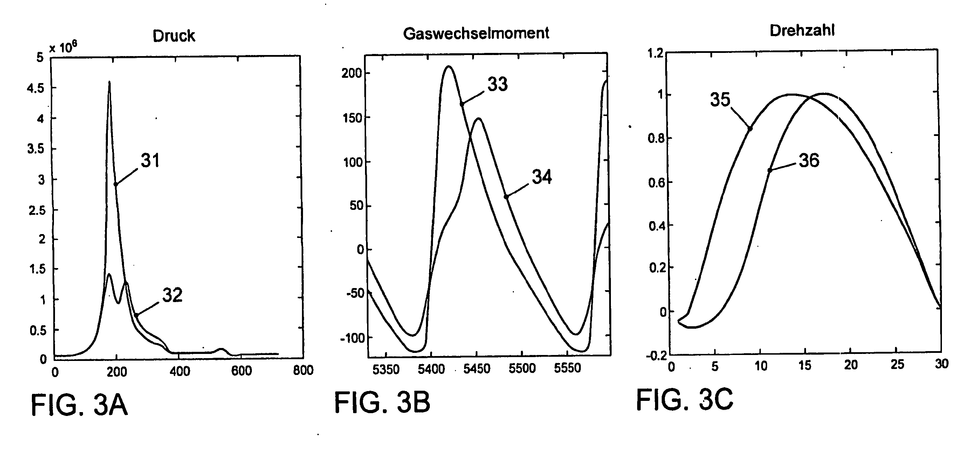

Fig. 3A zeigt mit Bezugszeichen 31 einen typischen Druckverlauf für eine frühe Verbrennungsschwerpunktlage und mit Bezugszeichen 32 einen Druckverlauf einer späten Verbrennungsschwerpunktlage. Derartige Druckverläufe können beispielsweise aus Konstruktionsdaten der Brennkraftmaschine 1 ermittelt werden. Fig. 3B zeigt die entsprechenden Gaswechselmomente $\widetilde{M}_{Gas}^{Früh}$ mit Bezugszeichen 33 und $\widetilde{M}_{Gas}^{Spät}$ mit Bezugszeichen 34. In Fig. 3C sind die aus der Verbrennung resultierenden auf eins normierten Anteile der Drehzahlverläufe für die frühe Verbrennungsschwerpunktlage (Bezugszeichen 35) bzw. für die späte Verbrennungsschwerpunktlage (Bezugszeichen 36) gezeigt.

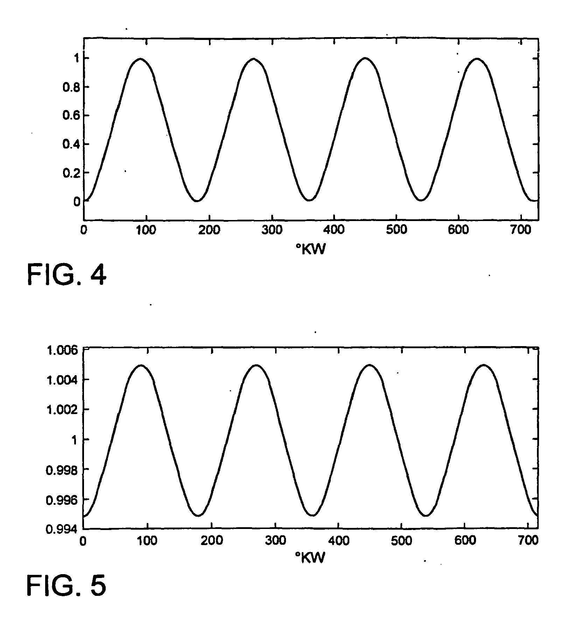

Fig. 4 zeigt den aus den oszillierenden Massen für ein ganzes Arbeitsspiel normierte Drehzahlanteil, welcher sich aus dem Integral über der Ableitung des Trägheitsmoments $\int \Theta'$ ergibt.

Wie zuvor beschrieben, kann die Modellfunktion nach Gleichung (14) nun anstelle der Fourier-Reihe als Matrix A in den weiteren Berechnungen gemäß der Gleichungen (5)-(11) verwendet werden. Darüber hinaus kann das Drehzahlmodell gemäß Gleichung (14) zusätzlich mit einer Fourier-Reihe gemäß Gleichung (3) für die Grundfrequenz und Frequenzen erster und zweiter Ordnung kombiniert werden, um Ungleichförmigkeiten der einzelnen Zylindersegmente in einem Arbeitsspiel mitzuschätzen.

Die zuvor beschriebenen Verfahren zur Bestimmung und Korrektur des Geberradfehlers können weiter verbessert werden, indem die Zahnfehler nicht auf der Grundlage der gemessenen Drehzahl, der sogenannten Rohdrehzahl, sondern auf der Grundlage einer Massen-Kraft-korrigierten Drehzahl bestimmt werden. Dadurch kann bei dem zuvor beschriebenen Fourier-Reiheverfahren auf Frequenzkomponenten über der Zündfrequenz hinaus verzichtet werden. Dies bedeutet für einen Vierzylindermotor beispielsweise, dass in der Fourier-Reihe nach Gleichung (3) nur noch Frequenzkomponenten für k=1...4 erforderlich sind, da die Massenkräfte keine drehzahlabhängigen Auswirkungen mehr zeigen.

Die Massen-Kraft-Korrektur wird auf der Grundlage des Gaswechselmoments, wie es im Zusammenhang mit Gleichung (12) zuvor beschrieben wurde, bestimmt. Der zweite Term $(\frac{1}{2}\Theta'\omega^2)$ beschreibt dabei den Momentenanteil, der durch die oszillierenden Massenkräfte, wie z.B. Kolben und Pleuel, hervorgerufen wird. Um diesen Anteil wird nun die Rohdrehzahl korrigiert, so dass in der resultierenden Massen-Kraft-korrigierten Drehzahl nur noch die aus der Verbrennung stammenden Kräfte und Beschleunigungen enthalten sind. Zur Vereinfachung wird von einer mittleren Drehzahl $\bar{\omega}$ über ein Arbeitsspiel ausgegangen, so dass bei der folgenden Integration die Drehzahl als konstant angesehen werden kann. Die Gleichung (12) des Gaswechselmoments wird nun in eine Drehzahlgleichung umgeformt, indem durch das Trägheitsmoment $\Theta$ dividiert wird und anschließend beide Seiten der Gleichung integriert werden. Gleichung (15) zeigt die so umgeformte Gleichung (12):

$$\int \frac{\widetilde{M}_{Gas}}{\Theta} dt = \int \ddot{\varphi} dt + \int \frac{1}{2\Theta} \Theta' \cdot \bar{\dot{\varphi}}^2 dt \qquad (15)$$

Die linke Seite der Gleichung beschreibt somit den Anteil am Drehzahlverlauf, der durch die Verbrennung hervorgerufen wird. Der Korrekturterm zur Korrektur der gemessenen Rohdrehzahl wird somit aus dem zweiten Term der rechten Seite bestimmt. Für das Integral des Korrekturterms ergibt sich nachfolgende Gleichung (16):

$$\int \frac{1}{2\Theta} \Theta' \cdot \overline{\dot{\varphi}}^2 dt = \frac{1}{2} \int \frac{1}{\Theta} \frac{d\Theta}{d\varphi} \cdot \frac{d\varphi}{dt} \frac{d\varphi}{dt} dt \qquad (16)$$

Unter der Annahme einer konstanten Drehzahl kann d$\varphi$/dt aus dem Integral herausgezogen werden und die rechte Seite der Gleichung (16) vereinfacht sich zu folgendem Term:

$$\frac{1}{2} \frac{d\varphi}{dt} \int \frac{1}{\Theta} \frac{d\Theta}{d\varphi} d\varphi \qquad (17)$$

Der folgende Term (18) stellte eine Lösung des unbestimmten Integrals des Terms (17) dar:

$$\frac{1}{2} \frac{d\varphi}{dt} \cdot \ln|\Theta| + C \qquad (18)$$

Die Integrationskonstante C wird derart gewählt, dass der Term (18) mittelwertfrei bleibt, d.h.:

$$C = \overline{-\ln|\Theta|} \qquad (19)$$

Bei einem Vierzylindermotor ist der Korrekturterm periodisch in den Zylindersegmenten. Somit ergibt sich für die Massen-Kraft-Korrektur der Rohdrehzahl n folgende Gleichung (20):

$$n_{Gas} = n \cdot \left( 1 + \frac{1}{2} \cdot \left( \ln|\Theta| - \overline{\ln|\Theta|} \right) \right) \qquad (20)$$

Der Korrekturterm kann für ein Arbeitsspiel vorab aus Konstruktionsdaten der Brennkraftmaschine 1 bestimmt werden und in der Vorrichtung 5 gespeichert werden. Fig. 5 zeigt beispielhaft den Verlauf des Korrekturterms der Gleichung (20) für ein Arbeitsspiel eines Vierzylindermotors. Da die Verläufe über die Zylindersegmente periodisch sind und in einem Zylindersegment der Verlauf symmetrisch ist, kann die Anzahl der zu speichernden Koeffizienten des Korrekturterms verringert werden und die Berechnung im Betrieb der Brennkraftmaschine auf wenige Multiplikationen und Additionen verringert werden.

Wie zuvor erwähnt, kann das Trägheitsmoment aus konstruktiven Daten der jeweiligen Brennkraftmaschine bestimmt werden. In diese Berechnung gehen alle rotierenden Trägheitsmomente und alle oszillierenden Massen ein. Komponenten, wie z.B. die Pleuel, werden in einen rotierenden und einen oszillierenden Anteil aufgeteilt, wobei der rotierende Anteil mit der Näherung $\Theta \approx m \cdot r^2$ mit dem Kurbelradius r bestimmt wird. Das Trägheitsmoment der oszillierenden Massen ist dabei vom Kurbelwellenwinkel abhängig und berechnet sich nach Gleichung (21):

$$\Theta_{Osz} = m_{Osz} \cdot r^2 \cdot x'^2 \qquad (21),$$

wobei x' ein Kolbengeschwindigkeitskennwert ist. Der Kolbengeschwindigkeitskennwert bildet die Winkelbeziehungen am Kurbeltrieb ab und ist ein Maß für die relative Kolbengeschwindigkeit:

$$x' = \frac{\dot{s}}{r\dot{\varphi}} \qquad\qquad (22)$$

$$X' = \sin(\varphi) + \frac{(\lambda \cdot \sin(\varphi + \mu)) \cdot \cos(\varphi)}{\sqrt{1 - (\lambda \cdot \sin(\varphi) + \mu)^2}} \qquad\qquad (23),$$

wobei $\dot{s}$ die Kolbengeschwindigkeit, $\lambda = r/l$ das Pleuelschlangenverhältnis und $\mu = d/l$ das Desachsierungsverhältnis ist.

Obwohl die zuvor beschriebenen Ausführungsformen zur Bestimmung des Geberradfehlers 3 vollständig in der Verarbeitungseinheit 6 durchgeführt werden können, können ein Rechenleistungsbedarf und ein Speicherbedarf in der Vorrichtung 5 erheblich verringert werden, wenn lediglich die Koeffizienten der Matrix $R_{\Delta\Phi}$ in dem Koeffizientenspeicher 7 abgelegt werden und nur die Berechnungen nach Gleichungen (8)-(11) in Echtzeit beim Betrieb der Brennkraftmaschine 1 mit der Verarbeitungseinheit 6 durchgeführt werden. Die zugrundeliegenden Berechnungen, beispielsweise nach Gleichungen (1)-(7) können vorzugsweise hingegen offline, d.h. beispielsweise während einer Entwicklung der Brennkraftmaschine 1 oder einer Erstinbetriebnahme der Brennkraftmaschine 1, durchgeführt werden und die sich daraus ergebenden Koeffizienten in den Koeffizientenspeicher 7 einmalig abgelegt werden. Dadurch können erhebliche Kosten für eine rechenstarke Verarbeitungseinheit 6 und einen großen Koeffizientenspeicher 7 eingespart werden.

**Patentansprüche**

1. Verfahren zur automatischen Bestimmung eines Geberradfehlers einer Brennkraftmaschine, wobei die Brennkraftmaschine (1) ein an einer Welle (2) der Brennkraftmaschine (1) angebrachtes Geberrad (3) und einen Geberradsensor (4) aufweist, wobei der Geberradsensor (4) mit Hilfe des Geberrades (3) in der Lage ist, mehrere vorbestimmte Drehwinkel der Welle (2) zu erfassen, wobei das Verfahren umfasst:

    - Bereitstellen eines Drehzahlmodells, welches für mehrere vorbestimmte Drehwinkel eines Arbeitsspiels der Brennkraftmaschine (1) jeweils eine Modelldrehzahl ($\dot{\varphi}_{Modell}$) bereitstellt,
    - Bestimmen einer jeweiligen Drehzahl ($\dot{\varphi}_{gemessen}$) für mehrere der vorbestimmten Drehwinkel des Arbeitsspiels mittels des Geberrads (3) und des Geberradsensors (4), und
    - Bestimmen des Geberradfehlers ($\Delta\varphi$) für mindestens einen der vorbestimmten Drehwinkel des Arbeitsspiels aus dem Drehzahlmodell, den erfassten Drehzahlen ($\dot{\varphi}_{gemessen}$) für die mehreren vorbestimmten Winkel des Arbeitsspiels und der Bedingung, dass die Summe über alle bestimmten Geberradfehler ($\Delta\varphi$) näherungsweise null ist.

2. Verfahren nach Anspruch 1, wobei zum Bestimmen des Geberradfehlers ($\Delta\varphi$) für mindestens einen der vorbestimmten Drehwinkel des Arbeitsspiels mit Hilfe des Drehzahlmodells mehrere Koeffizienten ($R_{\Delta\varphi}$) bestimmt werden, und wobei das Bestimmen des Geberradfehlers ($\Delta\varphi$) ein Bestimmen einer mit den Koeffizienten ($R_{\Delta\varphi}$) gewichteten Summe der erfassten Drehzahlen ($\dot{\varphi}_{gemessen}$) umfasst.

3. Verfahren nach Anspruch 2, wobei das Bestimmen der mehreren Koeffizienten ($R_{\Delta\varphi}$) während einer Entwicklung oder Fertigung der Brennkraftmaschine (1) durchgeführt wird, und wobei das Bestimmen der mit den Koeffizienten ($R_{\Delta\varphi}$) gewichteten Summe der erfassten Drehzahlen ($\dot{\varphi}_{gemessen}$) während eines Betriebs der Brennkraftmaschine (1) durchgeführt wird.

4. Verfahren nach Anspruch 3, wobei für mehrere Geberradfehler ($\Delta\Phi$) für mehrere der vorbestimmten Drehwinkel des Arbeitsspiels jeweils die mehreren Koeffizienten ($R_{\Delta\varphi}$) bestimmt werden, und wobei eine Symmetrieeigenschaft der Koeffizienten ($R_{\Delta\varphi}$) untereinander derart verwendet wird, dass nur nicht redundante Koeffizienten zur Verwendung während des Betriebs der Brennkraftmaschine (1) gespeichert werden.

5. Verfahren nach einem der vorhergehenden Ansprüche, wobei die jeweilige Modelldrehzahl ($\dot{\varphi}_{Modell}$) für einen jeweiligen vorbestimmten Drehwinkel des Arbeitsspiels eine Teilsumme einer Fourierreihe umfasst, wobei eine Grundfrequenz der Fourierreihe der Frequenz des Arbeitsspiels der Brennkraftmaschine (1) entspricht.

6. Verfahren nach Anspruch 5, wobei die Teilsumme der Fourierreihe trigonometrische Polynome der Grundfrequenz, der doppelten Grundfrequenz, der vierfachen Grundfrequenz und der achtfachen Grundfrequenz umfasst.

7. Verfahren nach einem der vorhergehenden Ansprüche, wobei die jeweilige Modelldrehzahl ($\dot{\varphi}_{Modell}$) für einen jeweiligen vorbestimmten Drehwinkel des Arbeitsspiels mit Hilfe eines physikalischen Modells auf der Grundlage eines Druckverlaufs in einem Zylinder der Brennkraftmaschine (1) bestimmt wird.

8. Verfahren nach einem der vorhergehenden Ansprüche, wobei der Geberradsensor (4) mit Hilfe des Geberrades (3) in der Lage ist, vorbestimmte Drehwinkel der Welle (2) in einem 6° Raster zu erfassen und wobei das Arbeitsspiel der Brennkraftmaschine (1) 720° umfasst, wobei die mehreren Koeffizienten ($R_{\Delta\varphi}$) zum Bestimmen des Geberradfehlers ($_{\Delta\varphi}$) für einen der vorbestimmten Drehwinkel des Arbeitsspiels 120 Koeffizienten umfasst.

9. Verfahren nach Anspruch 8 und 4, wobei aufgrund der Symmetrieeigenschaft der Koeffizienten ($R_{\Delta\varphi}$) 31 nicht redundante Koeffizienten gespeichert werden, welche als Koeffizienten der gewichteten Summe von 120 erfassten Drehzahlen ($\dot{\varphi}_{gemessen}$) für 120 vorbestimmte Drehwinkel des Arbeitsspiels zur Bestimmung des Geberradfehlers ($\Delta\varphi$) für einen vorbestimmten Drehwinkel des Arbeitsspiels verwendet werden.

10. Vorrichtung zur Bestimmung eines Geberradfehlers einer Brennkraftmaschine, wobei die Brennkraftmaschine (1) ein an einer Welle (2) der Brennkraftmaschine (1) angebrachtes Geberrad (3) und einen Geberradsensor (4) aufweist, wobei der Geberradsensor (4) mit Hilfe des Geberrades (3) in der Lage ist, mehrere vorbestimmte Drehwinkel der Welle (2) zu erfassen, wobei die Vorrichtung (5) eine Verarbeitungseinheit (6) umfasst, welche mit dem Geberradsensor (4) gekoppelt ist und ausgestaltet ist,

  - ein Drehzahlmodell bereitzustellen, welches für mehrere vorbestimmte Drehwinkel eines Arbeitsspiels der Brennkraftmaschine (1) jeweils eine Modelldrehzahl ($\dot{\varphi}_{Modell}$) bereitstellt,
  - eine jeweilige Drehzahl ($\dot{\varphi}_{gemessen}$) für mehrere der vorbestimmten Drehwinkel des Arbeitsspiels mittels des Geberrads (3) und des Geberradsensors (4) zu bestimmen; und
  - den Geberradfehler ($\Delta\varphi$) für mindestens einen der vorbestimmten Drehwinkel des Arbeitsspiels aus dem Drehzahlmodell, den erfassten Drehzahlen ($\dot{\varphi}_{gemessen}$) für die mehreren vorbestimmten Winkel des Arbeitsspiels und der Bedingung, dass die Summe über alle bestimmten Geberradfehler ($\Delta\varphi$) des Arbeitsspiels näherungsweise null ist, zu bestimmen.

11. Vorrichtung nach Anspruch 10, wobei die Vorrichtung (5) zur Durchführung des Verfahrens nach einem der Ansprüche 1-9 ausgestaltet ist.

## Claims

1. Method for automatic detection of a rotary encoder error of a combustion engine, wherein the combustion engine (1) has a rotary encoder (3) mounted on a shaft (2) of the combustion engine (1) and a rotary encoder sensor (4), wherein the rotary encoder sensor (4) is capable of detecting a plurality of predetermined rotational angles of the shaft (2) using the rotary encoder (3), wherein the method comprises:

  - providing a rotational speed model which respectively makes available a model rotational speed ($\dot{\varphi}_{model}$) for a plurality of predetermined rotational angles of a working cycle,
  - detecting a respective rotational speed ($\dot{\varphi}_{measured}$) for a plurality of the predetermined rotational angles of the working cycle by means of the rotary encoder (3) and the rotary encoder sensor (4), and
  - detecting the rotary encoder error ($\Delta\varphi$) for at least one of the predetermined rotational angles of the working cycle from the rotational speed model, the sensed rotational speed ($\dot{\varphi}_{measured}$) for the plurality of predetermined angles of the working cycle and the condition that the sum of all the detected rotary encoder errors ($\Delta\varphi$) is approximately zero.

2. Method according to Claim 1, wherein in order to detect the rotary encoder error ($\Delta\varphi$) for at least one of the predetermined rotational angles of the working cycle a plurality of coefficients ($R_{\Delta\varphi}$) are determined using the rotational speed model, and wherein the detection of the rotary encoder error ($\Delta\varphi$) comprises determining a sum, weighted with the coefficients ($R_{\Delta\varphi}$), of the sensed rotational speeds ($\dot{\varphi}_{measured}$).

3. Method according to Claim 2, wherein the detection of the plurality of coefficients ($R_{\Delta\varphi}$) is carried out during the development or fabrication of the combustion engine (1), and wherein the detection of the sum, weighted with the coefficients ($R_{\Delta\varphi}$), of the sensed rotational speeds ($\dot{\varphi}_{measured}$) is carried out while the combustion engine (1) is operating.

4. Method according to Claim 3, wherein the plurality of coefficients ($R_{\Delta\varphi}$) are respectively determined for a plurality of the predetermined rotational angles of the working cycle for a plurality of rotary encoder errors ($\Delta\varphi$), and wherein a symmetry property of the coefficients ($R_{\Delta\varphi}$) with respect to one another is used in such a way that only non-redundant coefficients are stored for use while the combustion engine (1) is operating.

5. Method according to one of the preceding claims, wherein the respective model rotational speed ($\dot{\varphi}_{model}$) for a respective predetermined rotational angle of the working cycle comprises a partial sum of a Fourier series, wherein a fundamental frequency of the Fourier series corresponds to the frequency of the working cycle of the combustion engine (1).

6. Method according to Claim 5, wherein the partial sum of the Fourier series comprises trigonometric polynomials of the fundamental frequency, of double the fundamental frequency, of four times the fundamental frequency and of eight times the fundamental frequency.

7. Method according to one of the preceding claims, wherein the respective model rotational speed ($\dot{\varphi}_{model}$) is detected for a respective predetermined rotational angle of the working cycle using a physical model on the basis of a pressure profile in a cylinder of the combustion engine (1).

8. Method according to one of the preceding claims, wherein the rotary encoder sensor (4) is capable of sensing predetermined rotational angles of the shaft (2) in a 6° grid using the rotary encoder (3), and wherein the working cycle of combustion engine (1) comprises 720°, wherein the plurality of coefficients ($R_{\Delta\varphi}$) for detecting the rotary encoder error ($\Delta\varphi$) for one of the predetermined rotational angles of the working cycle comprises 120 coefficients.

9. Method according to Claim 8 and 4, wherein 31 non-redundant coefficients are stored on the basis of the symmetry property of the coefficients ($R_{\Delta\varphi}$) 31, said non-redundant coefficients being used as coefficients of the weighted sum of 120 sensed rotational speeds ($\dot{\varphi}_{measured}$) for 120 predetermined rotational angles of the working cycle in order to detect the rotary encoder error ($\Delta\varphi$) for a predetermined rotational angle of the working cycle.

10. Device for detecting a rotary encoder error of a combustion engine, wherein the combustion engine (1) has a rotary encoder (3) which is mounted on a shaft (2) of the combustion engine (1), and a rotary encoder sensor (4), wherein the rotary encoder sensor (4) is capable of sensing a plurality of predetermined rotational angles of the shaft (2) using the rotary encoder (3), wherein the device (5) comprises a processing unit (6) which is coupled to the rotary encoder sensor (4) and is configured

- to make available a rotational speed model which respectively makes available a model rotational speed ($\dot{\varphi}_{model}$) for a plurality of predetermined rotational angles of a working cycle of the combustion engine (1),
- to detect a respective rotational speed ($\dot{\varphi}_{measured}$) for a plurality of the predetermined rotational angles of the working cycle by means of the rotary encoder (3) and the rotary encoder sensor (4); and
- to detect the rotary encoder error ($\Delta\varphi$) for at least one of the predetermined rotational angles of the working cycle from the rotational speed model, the sensed rotational speeds ($\dot{\varphi}_{measured}$) for the plurality of predetermined angles of the working cycle and the condition that the sum of all the detected rotary encoder errors ($\Delta\varphi$) of the working cycle is approximately zero.

11. Device according to Claim 10, wherein the device (5) is configured to carry out the method according to one of Claims 1-9.

**Revendications**

1. Procédé de détermination automatique d'une erreur de roue de détection d'un moteur à combustion interne, le moteur à combustion interne (1) présentant une roue de détection (3) montée sur un arbre (2) du moteur à combustion interne (1) et un capteur de roue de détection (4), le capteur de roue de détection (4) étant en mesure, à l'aide de la roue de détection (3), de détecter plusieurs angles de rotation prédéterminés de l'arbre (2), le procédé comprenant :

- la fourniture d'un modèle de régime, qui fournit, pour plusieurs angles de rotation prédéterminés d'un cycle de fonctionnement du moteur à combustion interne (1), à chaque fois un régime modèle ($\dot{\varphi}_{modèle}$),
- la détermination d'un régime respectif ($\dot{\varphi}_{mesuré}$) pour plusieurs des angles de rotation prédéterminés du cycle de fonctionnement au moyen de la roue de détection (3) et du capteur de roue de détection (4), et
- la détermination de l'erreur de roue de détection ($\Delta\varphi$) pour au moins l'un des angles de rotation prédéterminés du cycle de fonctionnement à partir du modèle de régime, des régimes détectés ($\dot{\varphi}_{mesuré}$) pour les plusieurs angles prédéterminés du cycle de fonctionnement et de la condition que la somme de toutes les erreurs de roue de détection déterminées ($\Delta\varphi$) soit approximativement nulle.

2. Procédé selon la revendication 1, dans lequel, pour la détermination de l'erreur de roue de détection ($\Delta\varphi$) pour au moins l'un des angles de rotation prédéterminés du cycle de fonctionnement, à l'aide du modèle de régime, plusieurs coefficients ($R_{\Delta\varphi}$) sont déterminés, et dans lequel la détermination de l'erreur de roue de détection ($_{\Delta\varphi}$) comprend la détermination d'une somme des régimes détectés ($\dot{\varphi}_{mesuré}$) pondérée avec les coefficients ($R_{\Delta\varphi}$).

3. Procédé selon la revendication 2, dans lequel la détermination des plusieurs coefficients ($R_{\Delta\Phi}$) est réalisée pendant un développement ou une fabrication du moteur à combustion interne (1), et dans lequel la détermination de la somme des régimes détectés ($\dot{\varphi}_{mesuré}$) pondérée avec les coefficients ($R_{\Delta\Phi}$) est effectuée pendant un fonctionnement du moteur à combustion interne (1).

4. Procédé selon la revendication 3, dans lequel, pour plusieurs erreurs de roue de détection ($\Delta\varphi$) pour plusieurs des angles de rotation prédéterminés du cycle de fonctionnement, à chaque fois les plusieurs coefficients ($R_{\Delta\varphi}$) sont déterminés, et dans lequel une propriété de symétrie des coefficients ($R_{\Delta\Phi}$) les uns par rapport aux autres est utilisée, de telle sorte que seuls des coefficients non redondants soient mémorisés en vue de leur utilisation pendant le fonctionnement du moteur à combustion interne (1).

5. Procédé selon l'une quelconque des revendications précédentes, dans lequel le régime modèle respectif ($\varphi_{modèle}$) pour un angle de rotation prédéterminé respectif du cycle de fonctionnement comprend une somme partielle d'une série de Fourier, une fréquence de base de la série de Fourier correspondant à la fréquence du cycle de fonctionnement du moteur à combustion interne (1).

6. Procédé selon la revendication 5, dans lequel la somme partielle de la série de Fourier comprend des polynômes trigonométriques de la fréquence de base, de la fréquence de base double, de la fréquence de base quadruple et de la fréquence de base multipliée par 8.

7. Procédé selon l'une quelconque des revendications précédentes, dans lequel le régime modèle respectif ($\varphi_{modèle}$) pour un angle de rotation prédéterminé respectif du cycle de fonctionnement est déterminé à l'aide d'un modèle physique sur la base d'une courbe de pression dans un cylindre du moteur à combustion interne (1).

8. Procédé selon l'une quelconque des revendications précédentes, dans lequel le capteur de roue de détection (4) est en mesure, à l'aide de la roue de détection (3), de détecter des angles de rotation prédéterminés de l'arbre (2) dans une grille de 6°, et dans lequel le cycle de fonctionnement du moteur à combustion interne (1) comprend 720°, les plusieurs coefficients ($R_{\Delta\Phi}$) pour déterminer l'erreur de roue de détection ($\Delta\varphi$) pour l'un des angles de rotation prédéterminés du cycle de fonctionnement comprenant 120 coefficients.

9. Procédé selon la revendication 8 et 4, dans lequel, sur la base de la propriété de symétrie des coefficients ($R_{\Delta\Phi}$), 31 coefficients non redondants sont mémorisés, lesquels sont utilisés en tant que coefficients de la somme pondérée de 120 régimes détectés ($\dot{\varphi}_{mesuré}$) pour 120 angles de rotation prédéterminés du cycle de fonctionnement en vue de déterminer l'erreur de roue de détection ($\Delta\varphi$) pour un angle de rotation prédéterminé du cycle de fonctionnement.

10. Dispositif de détermination d'une erreur de roue de détection d'un moteur à combustion interne, le moteur à combustion interne (1) présentant une roue de détection (3) montée sur un arbre (2) du moteur à combustion interne (1) et un capteur de roue de détection (4), le capteur de roue de détection (4) étant en mesure, à l'aide de la roue de détection (3), de détecter plusieurs angles de rotation prédéterminés de l'arbre (2), le dispositif (5) comprenant une unité de traitement (6), laquelle est accouplée au capteur de roue de détection (4) et est configurée

- pour fournir un modèle de régime, qui fournit, pour plusieurs angles de rotation prédéterminés d'un cycle de fonctionnement du moteur à combustion interne (1), à chaque fois un régime modèle ($\varphi_{modèle}$),
- pour déterminer un régime respectif ($\dot{\varphi}_{mesuré}$) pour plusieurs des angles de rotation prédéterminés du cycle de fonctionnement au moyen de la roue de détection (3) et du capteur de roue de détection (4) ; et

- pour déterminer l'erreur de roue de détection (Δφ) pour au moins l'un des angles de rotation prédéterminés du cycle de fonctionnement à partir du modèle de régime, des régimes détectés ($\dot{\varphi}_{mesuré}$) pour les plusieurs angles prédéterminés du cycle de fonctionnement et de la condition que la somme de toutes les erreurs de roue de détection déterminées (Δφ) du cycle de fonctionnement soit approximativement nulle.

**11.** Dispositif selon la revendication 10, dans lequel le dispositif (5) est configuré pour mettre en oeuvre le procédé selon l'une quelconque des revendications 1 à 9.

FIG. 1

FIG. 2

**Druck**

**Gaswechselmoment**

**Drehzahl**

FIG. 3A

FIG. 3B

FIG. 3C

EP 2 492 475 B1

FIG. 4

FIG. 5

**EP 2 492 475 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005047577 A1
- EP 1272858 B1
- DE 19540674 C2
- DE 10246806 A1
- DE 10256527 A1
- DE 10123022 B4
- EP 0929794 B1
- DE 602004009400 T2
- DE 102008010102 A1
- EP 0696355 B1
- DE 10107892 B4
- DE 10217560 A1
- DE 10318839 B3